# EUROPÄISCHE PATENTANMELDUNG

(11) **EP 4 283 841 A1**
(43) Veröffentlichungstag der Anmeldung: **29.11.2023**
(21) Anmeldenummer: 22175168.8
(22) Anmeldetag: 24.05.2022
(51) Int. Cl.: H02K 5/20

(54) **VERFAHREN ZUR HERSTELLUNG EINES STATORS EINER DYNAMOELEKTRISCHEN MASCHINE**

(71) Anmelder: Siemens Aktiengesellschaft, 80333 München (DE)
(72) Erfinder: Katzenberger, Tobias, 97631 Bad Königshofen STT Untereßfeld (DE); Plochmann, Bastian, 91413 Neustadt an der Aisch (DE)
(74) Vertreter: Siemens Patent Attorneys

(57) **Zusammenfassung**

Die Erfindung betrifft ein Verfahren zur Herstellung eines Stators (2) einer dynamoelektrischen rotatorischen Maschine (1) durch folgende Schritte:
- Anordnen eines Wicklungssystems (3) in einem magnetisch leitfähigen Körper, insbesondere einem axial geschichteten Blechpaket (4) in zu einer Innenbohrung (5) weisenden Nuten (6) derart, dass sich an den Stirnseiten des magnetisch leitfähigen Körpers jeweils ein Wickelkopf (10) einstellt,
- drehfestes Verbinden des magnetisch leitfähigen Körpers, insbesondere Blechpakets (4) mit einem, insbesondere wärmeleitenden Gehäuse (12), wobei sich das Gehäuse (12) auf beiden Seiten des Blechpakets (4) des Stators (2) axial zumindest bis zum axial äußeren Rand des jeweiligen Wickelkopfes (10) erstreckt, wodurch sich im Bereich der Wickelköpfe (10) jeweils ein umlaufender Spalt (14) zwischen einer radialen Außenseite (16) des Wickelkopfes (10) und einem inneren Rand (17) des Gehäuses (12) einstellt,
- Befüllen dieses umlaufenden Spaltes (14) zwischen radialer Außenseite (16) des Wickelkopfes (10) und dem inneren Rand (17) des Gehäuses (12) mit einer Vergussmasse (18), mit zumindest ein rheologie-optimierten Additiv, so dass eine thermische Anbindung des Wickelkopfes (10) an das Gehäuse (12) erfolgt.

## Beschreibung

Die Erfindung betrifft Verfahren zur Herstellung eines Stators einer dynamoelektrischen rotatorischen Maschine, als auch eine dynamoelektrische rotatorische Maschine mit einem derartigen Stator und die Verwendung einer derartigen dynamoelektrischen rotatorischen Maschine.

Dynamoelektrische Maschinen weisen einen Stator mit magnetisch leitfähigem Körper auf. In diesem Körper, insbesondere einem axial geschichteten Blechpaket ist in im Wesentlichen axial verlaufenden Nuten, die zu einem Rotor weisen ein Wicklungssystem vorgesehen. Dieses Wicklungssystem führt im Betrieb der dynamoelektrischen Maschine durch elektromagnetische Wechselwirkung mit dem Rotor zur Rotation des Rotors. Das Wicklungssystem weist elektrische Leiter auf, die beispielsweise Rund-Lackdrähten sind. Diese Drähte werden auf unterschiedlichste Weisen in der jeweiligen Nut positioniert, beispielsweise durch Einzieh- oder Träufelverfahren. An den Stirnseiten des Stators sind dabei Wickelköpfe ausgebildet.

Der Lack auf den Drähten entspricht im Anwendungsbereich der Niederspannungsmotoren, z.B. bis 1kV, der Hauptisolation. Nichtsdestotrotz wird zur weiteren mechanischen Verfestigung sowie zur Passivierung vor äußeren Einflüssen üblicherweise eine weitere Imprägnierung, respektive ein Verguss, durchgeführt.

Dynamoelektrische rotatorische Maschinen im Bereich der Niederspannung <1kV in der Leistungsklassen 0,5kW bis 2000kW werden aus Kostengründen mittels Kalttauchverfahren, bzw. Heißtauchverfahren (z.B. Strom-UV-Verfahren) imprägniert. Hierbei werden die Statoren in ein Becken mit Flüssigharz getaucht und im Anschluss thermisch gehärtet. Die geometrischen Zwischenräume der Wicklung in der Nut des Stators werden hierbei überwiegend mit Harz gefüllt und somit verfestigt, elektrisch zusätzlich isoliert und thermisch mit dem Blechpaket verbunden.

In den stirnseitigen Bereichen der Statoren befinden sich die Wickelköpfe, also die notwendigen Leiterstränge, welche die aktiven Bereiche der Leiter in den Nuten miteinander verbinden. Die Wickelköpfe werden vor dem Imprägnierverfahren nochmals mittels Flächenisolierstoffen (z.B. Einlege-Papiere) ausgestattet, um unterschiedliche elektrische Phasen der dynamoelektrischen Maschine elektrisch voneinander zu isolieren. Des Weiteren wird der Wickelkopf in Form gepresst, komprimiert und bandagiert, um vorgegebene geometrische Maße einzuhalten und eine vorgesehene axiale Baulänge nicht zu überschreiten.

Eine thermische Anbindung der Wickelköpfe zu einem Gehäuse ist ausschließlich über einen dazwischen befindlichen Zwischenraum gegeben, welcher mit Luft gefüllt ist. Eine Entwärmung des Wickelkopfes findet somit äußerst unzureichend über die thermischen Kontaktübergänge von Wicklung zur Luft und weiter von Luft auf das Gehäuse statt. Dies bildet einen kritischen und vor allem die Leistungsklasse eines Motors limitierenden Faktor, da insbesondere im Wickelkopf sogenannte Hotspots entstehen können. Dabei entstehen durch vergleichsweise hohe Stromstärke im Wicklungssystem und der zusätzlich geometrischen und mechanisch notwendigen Verdichtung bzw. Fixierung des Wicklungssystems im Wickelkopf, Bereiche, die deutlich heißer werden als innerhalb der Statornuten. In den Nuten des Stators ist die Entwärmung über das umliegende Eisenblech sehr effizient gegeben.

Eine mögliche Entwärmung des Wickelkopfes wird innerhalb eines Niederspannungsmotors durch drehzahlunvariable Flügelräder angestrebt, welche direkt auf die Welle montiert sind und proportional zur Drehzahl des Motors die Luftkonvektion antreiben, sodass der Wickelkopf von konvektiver Luft umspült wird. Diese Belüftung wirkt sich jedoch wiederum negativ auf die Leistung bzw. den Wirkungsgrad des Motors aus und ist fertigungs- und produkttechnisch aufwändig und vergleichsweise kostenintensiv.

Sind aufgrund höherer Leistungsanforderungen an die dynamoelektrische Maschine bessere Entwärmungseigenschaften notwendig, so muss der Wickelkopf mittels eines "Wickelkopfvergusses" an das Gehäuse thermisch angebunden werden.

Neben den Materialkosten sind die Prozesskosten eines Wickelkopfvergusses deutlich markanter, da die imprägnierten Statoren aus dem Standart-Fertigungsfluss ausgeschleust werden müssen und mittels Vergussformen für den Wickelkopfverguss vorbereitet werden müssen (erst eine Seite, dann die andere). Hierbei wird eine Art Innendorn in die Innenbohrung des Stators formschlüssig eingebracht und der Stator ggf. auf eine erhöhte Temperatur erhitzt (z.B. 80°C, um die Fließfähigkeit der Vergussmasse zu verbessern). Im Anschluss wird die Vergussmasse in das so eingehauste Wickelkopfreservoir gegossen. Im Anschluss wird die Masse über mehrere Stunden bei ca. 150°C hinweg z.B. im Heißluftofen gehärtet. Nach der Härtung - und der Abkühlung - wird die jeweils andere Wickelkopfseite ebenso bearbeitet.

Der Vergusskörper umschließt somit nach den beiden Einzelprozessen beide Wickelköpfe sowohl radial innenseitig als auch radial außenseitig, wohingegen der Wärmefluss beim geschlossenen Motor überwiegend radial nach außen hin zum Gehäuse erfolgt. Die vollständige Umschließung ist vielmehr ein dem Prozess geschuldetes Phänomen, da der Innendorn als Gehäusewandung des Vergusses dient und im Anschluss entfernt und gereinigt werden muss.

In Summe handelt es sich hier also um einen sehr aufwändigen Herstellungsprozess, der Zeit, Energie und Materialkosten beansprucht. Außerdem führt dieser Fertigungsprozess zu unnötigem Material in dem Motor, der für die Funktionsweise des Motors irrelevant ist.

Aus der DE 693 07 422 T2 ist ein Elektromotor bekannt, der mittels Kerne ein vollständig eingegossenes Wicklungssystem zeigt.

Aus der DE 199 57 942 C1 ist eine Hochfrequenz-Motorspindel bekannt, deren Wickelkopf von einem U-förmigen Hohlkörper umgeben ist, wobei ein Freiraum zwischen Wickelkopf und Hohlkörper ausgegossen ist.

Aus der DE 199 02 837 C1 ist eine rotierende elektrische Maschine bekannt, deren Wickelkopf über Wärmebrücken thermisch an einen Tragkörper gekoppelt ist, wobei die Wärmebrücke einen Feststoffring und einen Gießharzkörper aufweist.

Die aufgeführten bekannten Lösungen zur Entwärmung des Wickelkopfes eines Stators einer dynamoelektrischen rotatorischen Maschine sind jedoch vergleichsweise aufwändig, insbesondere wenn es sich um dynamoelektrische Maschinen handelt, die in größeren Stückzahlen produziert werden sollen.

Ausgehend davon liegt der Erfindung die u.a. Aufgabe zugrunde eine dynamoelektrische Maschine zu schaffen, die mit vergleichsweise geringem herstellungsbedingtem Aufwand eine ausreichende Kühlung, insbesondere eine gute thermische Entwärmung des Wickelkopfes eines Stators einer dynamoelektrischen Maschine aufweist.

Die Lösung der gestellten Aufgabe gelingt durch ein Verfahren zur Herstellung eines Stators einer dynamoelektrischen rotatorischen Maschine durch folgende Schritte:
- Anordnen eines Wicklungssystems in einem magnetisch leitfähigen Körper, insbesondere einem axial geschichteten Blechpaket in zu einer Innenbohrung weisenden Nuten derart, dass sich an den Stirnseiten des magnetisch leitfähigen Körpers jeweils ein Wickelkopf einstellt,
- drehfestes Verbinden des magnetisch leitfähigen Körpers mit einem, insbesondere wärmeleitenden Gehäuse, wobei sich das Gehäuse auf beiden Seiten des Blechpakets des Stators axial zumindest bis zum axial äußeren Rand des jeweiligen Wickelkopfes erstreckt, wodurch sich im Bereich der Wickelköpfe jeweils ein umlaufender Spalt zwischen einer radialen Au-βenseite des Wickelkopfes und einem inneren Rand des Gehäuses einstellt,
- Befüllen dieses umlaufenden Spaltes zwischen radialer Au-βenseite des Wickelkopfes und dem inneren Rand des Gehäuses mit einer Vergussmasse, mit zumindest ein rheologie-optimierten Additiv, so dass eine thermische Anbindung des Wickelkopfes an das Gehäuse erfolgt

Die Lösung der gestellten Aufgabe gelingt auch durch eine dynamoelektrische rotatorische Maschine, mit einem Stator mit einem magnetisch leitfähigen Körper, insbesondere einem axial geschichteten Blechpaket, wobei in zu einer Innenbohrung des Stators weisenden Nuten ein Wicklungssystem angeordnet ist, das den Stirnseiten des magnetisch leitfähigen Körpers jeweils ein Wickelkopf ausbildet,
wobei zwischen dem magnetisch leitfähigen Körper und einem insbesondere wärmeleitenden Gehäuse eine drehfeste Verbindung vorgesehen ist,
wobei sich das Gehäuse auf beiden Seiten des magnetisch leitfähigen Körpers des Stators axial zumindest bis zum axial äußeren Rand des jeweiligen Wickelkopfes erstreckt, wobei der sich im Bereich der Wickelköpfe umlaufende Spalt zwischen einer radialen Außenseite des Wickelkopfes und einem inneren Rand des Gehäuses vorhandene Spalt mittels einer Vergussmasse, mit zumindest einem rheologie-optimierten Additiv gefüllt ist, so dass sich eine thermische Anbindung des Wickelkopfes an das Gehäuse einstellt,
und einem Rotor, wobei Stator und Rotor durch einen Luftspalt beabstandet sind.

Als Wicklungssystem des Stators wird die Gesamtheit der elektrischen Leiter samt ihrer eventuellen Isolierung betrachtet. Die Leiter können dabei Formspulen, Rund- oder Flachdrähte mit und ohne Isolierung sein. Dabei sind ebenfalls ein-, drei- oder mehrphasige Systeme eingeschlossen. Ebenso sind dabei wicklungstechnisch sowohl Zahnspulentechnik als auch gesehnte Wicklungen oder Schleifenwicklung umfasst. Entscheidend ist dabei immer, dass zwischen dem durch ein beliebiges Wicklungssystem gebildeter Wickelkopf thermisch direkt an ein Gehäuse gekoppelt wird.

Erfindungsgemäß erfolgt nunmehr eine thermische Anbindung des Wickelkopfes an ein den Wickelkopf umgebendes Gehäuse. Dies geschieht durch einen zielgerichteten Dispensierprozess der wärmeleitfähigen, fließfähigen Masse in einen umlaufenden Spalt zwischen Wickelkopf und dem Gehäuse. Die wärmeleitfähige Vergussmasse zeichnet sich dabei durch die folgenden prozessoptimierten Eigenschaften aus.

Bei der Vergussmasse handelt es sich um einen mit wärmeleitfähigen Partikeln gefüllten Formstoff (Reaktivharz, z.B. Epoxy, Polyurethan oder Polyester. Die Füllstoffpartikel sind je nach gewünschter Wärmeleitfähigkeit und gewünschtem Preisniveau des Formstoffes u.a. aus Quarzmehl, Quarzgut, Bornitrid oder Aluminiumoxid in einer optimierten Korngrößenverteilung als Mikropartikel in der Matrix (Reaktivharz) dispergiert, sodass eine noch möglichst dünnflüssige, fließfähige Formmasse vorhanden ist. Der Füllgrad des Füllstoffes in der Matrix beträgt zwischen 20 und 70 Vol.-%, je nach gewünschter Fließfähigkeit bei Verarbeitungstemperatur.

Neben der Füllung mit den oben genannten wärmeleitfähigen Partikeln ist die Vergussmasse mit einem rheologie-optimierenden Additiv ausgestattet. Dieses Additiv bewirkt, dass die Fließfähigkeit der Vergussmasse thixotrope und strukturviskose Eigenschaften annimmt und somit bei erhöhter Scherrate, (was durch das Ausbringen durch einen Dispensierautomaten, eine Dosiereinheit geschieht) seine Viskosität deutlich verringert und im weiteren Verlauf mit niedrigen Scherraten eine Rückkehr zu deutlich höheren Viskositäten vornimmt. Somit ist es möglich, den Bereich, insbesondere den Spalt zwischen Wickelkopf und Gehäuse mittels einer dafür ausgestatteten Dosiereinheit den senkrecht stehenden Stator sukzessive zu befüllen. Die fließende Vergussmasse verringert aufgrund der auftretenden Scherkräfte bei der Dispensierung seine Viskosität, verteilt sich dabei homogen im Zielbereich und umschließt die Einzeldrähte des Wickelkopfes formschlüssig.

Im Zuge des immer langsamer werdenden Fließprozesses zwischen die Nutaustritte erhöht sich die Viskosität, aufgrund der abnehmenden Scherkräfte zunehmend, was zu einem selbstständigen Erstarren der Fließfront zwischen den Nutaustritten führt.

Eine Auffüllung/ein Vergießen des Zwischenraumes zwischen Wickelkopf und Gehäuse ist somit ohne weitere Einhausung, also einen Innendorn für die Innenbohrung des Stators möglich.

Ein typisches Beispiel für ein Thixotropieradditiv ist pyrogene Kieselsäure (Kieselgel), welche in die Vergussmasse dispergiert wird (0,1-1 Gew.-%), um diese erforderlichen Eigenschaften zu erhalten.

Eine weitere Materialeigenschaft der Vergussmasse ist, dass es sich um ein zwei-komponentiges Reaktivharz handelt, welches in der Dosiereinheit in-situ gemischt wird (Harz und Härter-Komponente). Somit ist sichergestellt, dass die Vergussmasse innerhalb vergleichsweise kurzer Zeit (wenige Stunden bis nur zu einigen Minuten) ohne weiteren Temperatureintrag angeliert. Die Grundviskosität der Vergussmasse erhöht sich aufgrund der chemischen Netzwerkbildung derart, sodass der Fertigungsfluss nicht unterbrochen wird und eine Weiterarbeit am Stator bzw. an der dynamoelektrischen Maschine möglich ist.

Ein Temperatureintrag in diesen Prozess wäre Viskositätserniedrigend und somit nicht praktikabel, da sonst die Vergussmasse ohne Einhausung bzw. Innendorn u.a. zwischen den Nutaustritten hindurchwandern und in den Innenradius, also die Innenbohrung des Stators fließen würde.

Im Anschluss wird eine Härtung des Stators im Gehäuse bei Raumtemperatur innerhalb von 24 Stunden angepeilt, was z.B. mittels 2-komponentiger Epoxys mit aminischen Härterkomponenten erreicht wird.

Mit der hier genannten Erfindung ist der Prozess einer thermischen Anbindung des Wickelkopfes zum Gehäuse deutlich kosteneffizienter hinsichtlich Taktzeiten, Energieeintrag (Raumtemperatur) und Prozesskomplexität zu gestalten, als mit konventionellen aus dem Stand der Technik bekannten Anbindungen.

Somit ist die Erreichung höherer Leistungsklassen oder längerer Lebensdauer einer dynamoelektrischen Maschine bei gleicher elektrischer und thermischer Belastung deutlich kostengünstiger zu produzieren.

Die Erfindung sowie weitere vorteilhafte Ausgestaltungen der Erfindung werden anhand prinzipiell dargestellter Ausführungsbeispiele näher erläutert, darin zeigen:
- FIG 1: prinzipieller Längsschnitt einer dynamoelektrischen rotatorischen Maschine,
- FIG 2: Seitenansicht eines Stators im Gehäuse,
- FIG 3: perspektivische Teilansicht eines Stators im Gehäuse,
- FIG 4,5: weitere Gehäuseausführungen.

Es sei angemerkt, dass sich Begriffe wie "axial", "radial", "tangential" etc. auf die in der jeweiligen Figur bzw. im jeweils beschriebenen Beispiel zum Einsatz kommende Achse 7 beziehen. Mit anderen Worten beziehen sich die Richtungen axial, radial, tangential stets auf eine Achse 7 des Rotors 19 und damit auf die entsprechende Symmetrieachse des Stators 2. Dabei beschreibt "axial" eine Richtung parallel zur Achse 7, "radial" beschreibt eine Richtung orthogonal zur Achse 7, auf diese zu oder auch von ihr weg, und "tangential" ist eine Richtung, die in konstantem radialem Abstand zur Achse 7 und bei konstanter Axialposition kreisförmig um die Achse 7 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 19 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen miteinander kombinierbar, ohne das Wesen der Erfindung zu verlassen.

Als Wicklungssystem 3 des Stators 2 wird die Gesamtheit der elektrischen Leiter samt ihrer eventuellen Isolierung betrachtet. Die Leiter können dabei Formspulen, Rund- oder Flachdrähte mit und ohne Isolierung sein. Dabei sind ebenfalls ein-, drei- oder mehrphasige Systeme eingeschlossen. Ebenso sind dabei wicklungstechnisch sowohl Zahnspulentechnik als auch gesehnte Wicklungen oder Schleifenwicklung umfasst. Entscheiden ist dabei immer, dass zwischen dem durch ein beliebiges Wicklungssystem 3 gebildeter Wicklungskopf 10 thermisch direkt an ein Gehäuse 12 gekoppelt wird.

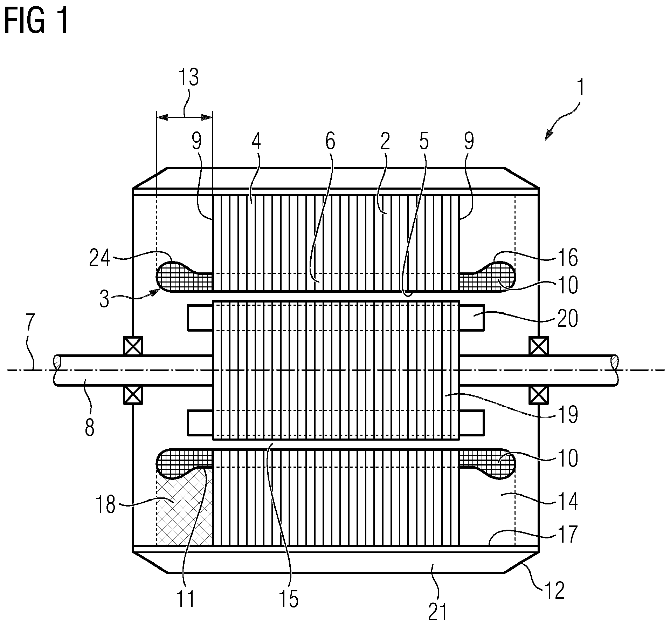

FIG 1 zeigt einen prinzipiellen Längsschnitt einer dynamoelektrischen rotatorischen Maschine 1, in einem Gehäuse 12 drehfest fixiert ist. Ein Stator 2, der als magnetisch leitfähigen Körper, insbesondere als ein Blechpaket 4 ausgebildet ist, weist in zu einem Luftspalt 15 der dynamoelektrischen Maschine 1 weisenden Nuten 6 ein Wicklungssystem 3 auf. Das Wicklungssystem 3 bildet an den Stirnseiten des Stators 2 jeweils einen Wickelkopf 10 aus, der einen Wulst 24 und einen Wickelhals 11 umfasst. Als Wickelhals 11 wird der Abschnitt des Wickelkopfes 10 bezeichnet, der den Abschnitt des Wicklungssystems 3 unmittelbar nach Verlassen der Nut 6 bildet, bei dem die elektrischen Leiter noch im Wesentlichen axial verlaufen, bevor sie den Wulst 24 bilden.

Der Wickelkopf 10 des Wicklungssystems 3 weist eine axiale Erstreckung 13 auf, die der späteren Füllhöhe der Vergussmasse 18 entspricht. Zwischen dem inneren Rand 17 des Gehäuses 12 und der Außenseite des Wickelkopfes 10 des Wicklungssystems 3 befindet sich ein Spalt 14, der mit einer Vergussmasse 18 befüllt ist, die später näher beschrieben wird.

Von einem Luftspalt 15 vom Stator 2 beabstandet, ist ein Rotor 19 angeordnet, der mit einer Welle 8 drehfest verbunden ist und um eine Achse 7 drehbar gelagert ist. Der Rotor 19 ist in diesem Fall geblecht ausgeführt und weist einen in dem Blechpaket angeordneten Kurzschlusskäfig 20 auf. Das Gehäuse 12 weist am äußeren Umfang zumindest abschnittsweise Rippen 21 auf.

Der Spalt 14 ist nunmehr in seiner axialen Erstreckung 13 mit einem mit einer Vergussmasse 18 beaufschlagt, sodass zumindest die Außenseite des Wickelkopfes 10 des Wicklungssystems 3 thermisch gut an das Gehäuse 12 angebunden ist. Aufgrund der Materialeigenschaften der Vergussmasse 18 dringt diese zumindest in die radial äußeren Bereiche des Wickelkopfes 10, ein jedoch nur so weit, dass keine Vergussmasse am radial inneren Bereich des Wickelkopfes 10 austritt.

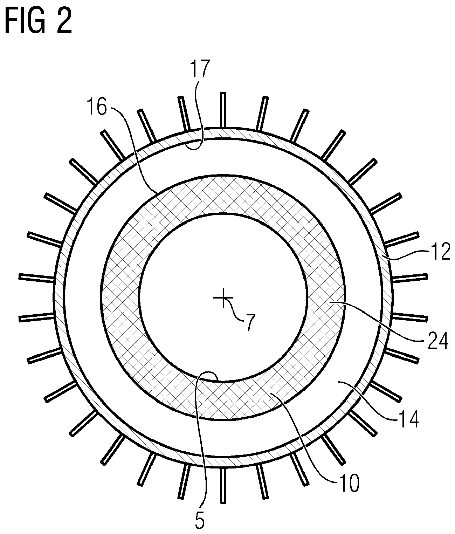

FIG 2 zeigt in einer Seitenansicht den Stator 2, der in dem Gehäuse 12 positioniert ist mit dessen Wicklungssystem 3, das an der Stirnseite des Stators 2 den Wickelkopfes 10 ausbildet. Der Spalt 14 wird durch die Vergussmasse 18 befüllt. Dabei ist der Stator 2 insbesondere senkrecht oder geneigt aufgestellt. Es wird dabei zunächst die eine Stirnseite des Stators mit Vergussmasse 18 versehen, danach die andere.

Die oben beschriebene Befüllung des Stators 2 im senkrechten oder geneigten Zustand erfordert eine serielle Bearbeitung der jeweiligen Stirnseiten. Dabei sind zwischen der Beendigung der Befüllung auf der einen Stirnseite und dem Startvorgang der Befüllung auf der anderen Stirnseite bei Raumtemperatur je nach Dimension des Spaltes 14 (abhängig u.a. vom Motortyp) ca. 15 bis 30 Minuten anzusetzen sind.

Aufgrund der Materialeigenschaften der Vergussmasse 18 dringt diese in den Wickelkopf 10, also Wulst 24 und Wickelhals 11 nur so weit ein, dass die Innenbohrung 5 frei von Vergussmasse 18 bleibt. Dies vereinfacht die Fertigung und das Vergießen des Wicklungssystems 3 auf einfache Art und Weise. Des Weiteren wird die thermische Anbindung des Wickelkopfes 10 an das Gehäuse 12 verbessert.

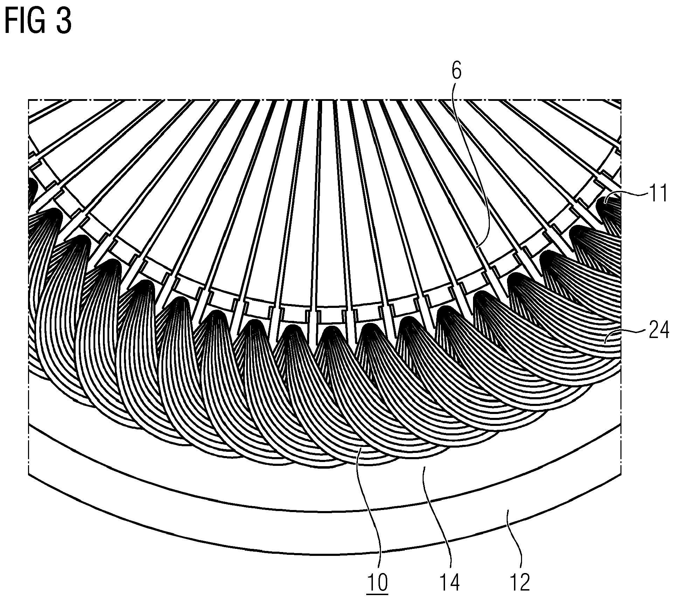

FIG 3 zeigt in einer perspektivischen Teilansicht einen Ausschnitt des Stators 2, der im Gehäuse 12 positioniert ist. Der Stator 2 ist mit dem Wicklungssystem 3 versehen. Axial außerhalb des Blechpakets 4 des Stators 2 sind die Wickelhälse 11 zu sehen, deren elektrische Leiter axial verlaufen. Im Wulst 24 des Wickelkopf 10 krümmen sich dann diese Leiter, um in andere Nuten 6 zu münden. Die Packungsdichte der Leiter des Wicklungssystems 3 nimmt im Wulst 24 radial nach innen zu, sodass es aufgrund der immer enger werdenden Kapillaren zwischen den Leitern der Vergussmasse 18 neben der nachlassenden Viskosität zusätzlich erschwert wird über den Wickelkopf 10 radial nach innen vorzudringen.

Aufgrund der guten thermischen Leitfähigkeit der einzelnen aneinander liegenden Leiter, insbesondere Kupferleiter ist innerhalb des Wulstes 24 dennoch eine vergleichsweise akzeptable thermisch Leitfähigkeit nach außen gegeben, auch wenn die einzelnen Leiter nicht direkt mit Vergussmasse 18 umgeben sind.

Aufgrund des gegenseitigen Anliegens der elektrischen Leiter tritt auch hier eine thermische Leitfähigkeit radial nach außen in den Bereich des Wickelkopfes 10 ein, der mit der thermisch gut leitenden Vergussmasse 18 beaufschlagt wird.

Bei der Vergussmasse 18 wird ein mit wärmeleitfähigen Partikeln gefüllten Formstoff (Reaktivharz, z.B. Epoxy, Polyurethan oder Polyester eingesetzt. Diese Füllstoffpartikel sind je nach angestrebter Wärmeleitfähigkeit der Vergussmasse u.a. Quarzmehl, Quarzgut, Bornitrid oder Aluminiumoxid in einer optimierten Korngrößenverteilung als Mikropartikel in einer Matrix (Reaktivharz) dispergiert, so dass eine noch möglichst dünnflüssige, fließfähige Formmasse vorhanden ist. Der Füllgrad des Füllstoffes in der Matrix beträgt zwischen 20 und 70 Vol.-%, je nach gewünschter Fließfähigkeit bei Verarbeitungstemperatur.

Neben der Füllung mit den oben genannten wärmeleitfähigen Partikeln ist die Vergussmasse 18 erfindungsgemäß mit einem rheologie-optimierenden Additiv ausgestattet. Dieses Additiv bewirkt, dass die Fließfähigkeit der Vergussmasse 18 thixotrope und strukturviskose Eigenschaften annimmt und somit bei erhöhter Scherrate, seine Viskosität deutlich verringert und im weiteren Verlauf mit niedrigen Scherraten eine Rückkehr zu deutlich höheren Viskositäten vornimmt. Somit ist es möglich, den Bereich, insbesondere den Spalt 14 zwischen Wickelkopf 10 und dem inneren Rand 17 des Gehäuse 12 mittels einer dafür ausgestatteten Dosiereinheit den vorzugsweise senkrecht stehenden Stator 2 bis zur axialen Erstreckung 13 des Wickelkopfes 10 sukzessive zu befüllen. Die fließende Vergussmasse 18 verringert aufgrund der auftretenden Scherkräfte bei der Dispensierung seine Viskosität, verteilt sich dabei homogen im Spalt 14 und umschließt die Einzeldrähte des Wickelkopfes 10 formschlüssig.

Im Zuge des immer langsamer werdenden Fließprozesses zwischen und innerhalb der Wickelhälse 11 und in dem Wulst 24 erhöht sich die Viskosität, aufgrund der abnehmenden Scherkräfte zunehmend, was zu einem selbstständigen Erstarren der Fließfront der Vergussmasse 18 zwischen den Wickelhälse 11 führt.

Eine Auffüllung/ein Vergießen des Zwischenraumes bzw. des Spaltes 14 zwischen Wickelkopf 10 und Gehäuse 12 ist somit ohne weitere Einhausung, also einen Innendorn für die Innenbohrung des Stators 2 möglich.

Ein typisches Beispiel für ein Thixotropieradditiv ist pyrogene Kieselsäure (Kieselgel), welche in die Vergussmasse 18 dispergiert wird (0,1-1 Gew.-%), um diese angestrebten Eigenschaften zu erhalten.

Eine weitere Materialeigenschaft der Vergussmasse 18 ist, dass es sich um ein zwei-komponentiges Reaktivharz handelt, welches in einer Dosiereinheit in-situ gemischt wird (Harz und Härter-Komponente). Somit ist sichergestellt, dass die Vergussmasse 18 innerhalb vergleichsweise kurzer Zeit (wenige Stunden bis nur zu einigen Minuten) ohne weiteren Temperatureintrag angeliert. Die Grundviskosität der Vergussmasse 18 erhöht sich aufgrund der chemischen Netzwerkbildung derart, sodass der Fertigungsfluss nicht unterbrochen wird und eine Weiterarbeit am Stator 2 bzw. an der dynamoelektrischen Maschine 1 möglich ist.

Ein Temperatureintrag in diesen Prozess wäre Viskositätserniedrigend und somit nicht praktikabel, da sonst die Vergussmasse 18 ohne Einhausung bzw. Innendorn u.a. zwischen den Wickelhälsen 11 und/oder dem Wulst 24 hindurchwandern und in den Innenradius, also die Innenbohrung des Stators 2 fließen würde.

Das Gehäuse 12 kann grundsätzlich aus Aluminium oder anderen wärmeleitenden Materialen bestehen. Des Weiteren kann es, um die Kühlung weiter zu verbessern zumindest abschnittsweise mit Rippen 21 ausgestattet sein.

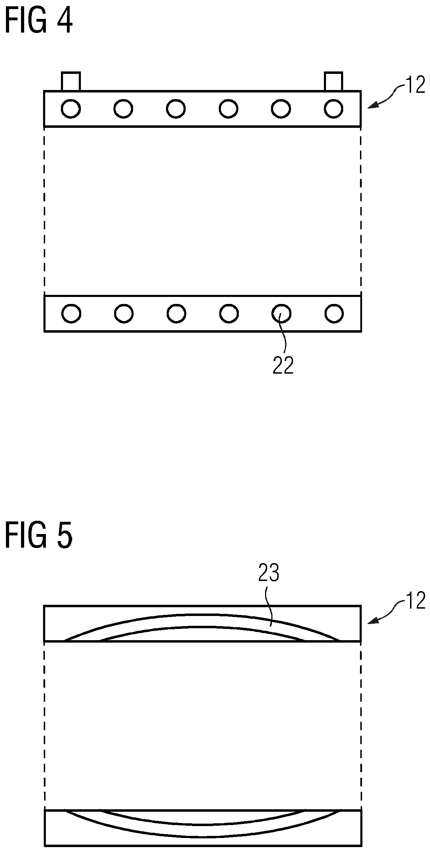

FIG 4 zeigt ein Gehäuse 12 mit beispielhaften Mitteln zur Flüssigkeitskühlung 22. Dabei sind in dem Gehäuse 12 wendelförmig verlaufende Kühlrohre angeordnet. Dies verbessert die Kühlung der dynamoelektrischen Maschine 1, insbesondere des Stators 2 und dort vor allem des Wickelkopfes 10.

Figur 5 zeigt eine weitere Möglichkeit der Gestaltung des Gehäuses 12, das nunmehr die Möglichkeit eines geschlossenen Luft-Innenkühlkreislauf bietet. Dabei wird über einen innerhalb des Gehäuses 12 angeordneten Lüfter Luft im Innenraum der Maschine 1 u.a. über die Wickelköpfe 10 gefördert.

Derartige dynamoelektrische rotatorische Maschinen 1 werden aufgrund ihres einfachen Aufbaus und ihrer Effizienz als Lüfter, Kompressoren, Verdichter, Pumpen etc. in der Industrie, der Nahrungsmittelherstellung, und in der Verkehrstechnik eingesetzt.

## Patentansprüche

1. Verfahren zur Herstellung eines Stators (2) einer dynamoelektrischen rotatorischen Maschine (1) durch folgende Schritte:
- Anordnen eines Wicklungssystems (3) in einem magnetisch leitfähigen Körper, insbesondere einem axial geschichteten Blechpaket (4) in zu einer Innenbohrung (5) weisenden Nuten (6) derart, dass sich an den Stirnseiten des magnetisch leitfähigen Körpers jeweils ein Wickelkopf (10) einstellt,
- drehfestes Verbinden des magnetisch leitfähigen Körpers, insbesondere Blechpakets (4) mit einem, insbesondere wärmeleitenden Gehäuse (12), wobei sich das Gehäuse (12) auf beiden Seiten des Blechpakets (4) des Stators (2) axial zumindest bis zum axial äußeren Rand des jeweiligen Wickelkopfes (10) erstreckt, wodurch sich im Bereich der Wickelköpfe (10) jeweils ein umlaufender Spalt (14) zwischen einer radialen Außenseite (16) des Wickelkopfes (10) und einem inneren Rand (17) des Gehäuses (12) einstellt,
- Befüllen dieses umlaufenden Spaltes (14) zwischen radialer Außenseite (16) des Wickelkopfes (10) und dem inneren Rand (17) des Gehäuses (12) mit einer Vergussmasse (18), mit zumindest ein rheologie-optimierten Additiv, so dass eine thermische Anbindung des Wickelkopfes (10) an das Gehäuse (12) erfolgt.

2. Verfahren zur Herstellung eines Stators (2) einer dynamoelektrischen rotatorischen Maschine (1) nach Anspruch 1, **dadurch gekennzeichnet, dass** der magnetisch leitfähige Körper in das Gehäuse (12) eingeschrumpft wird.

3. Verfahren zur Herstellung eines Stators (2) einer dynamoelektrischen rotatorischen Maschine (1) nach Anspruch 1 oder 2, **dadurch gekennzeichnet, dass** das Wicklungssystem (3) vorgeformte Formspulen oder Drähte aufweist.

4. Verfahren zur Herstellung eines Stators (2) einer dynamoelektrischen rotatorischen Maschine (1) nach einem der vorhergehenden Ansprüche, **dadurch gekenn-zeichnet**, dass als Additiv insbesondere pyrogene Kieselsäure eingesetzt wird.

5. Verfahren zur Herstellung eines Stators (2) einer dynamoelektrischen rotatorischen Maschine (1) nach einem der vorhergehenden Ansprüche, **dadurch gekenn-zeichnet**, dass in der Vergussmasse (18) zusätzlich ein zwei-komponentiges Reaktivharz und/oder ein Füllstoff zur Erhöhung der Gesamtviskosität und Wärmeleitfähigkeit vorgesehen wird.

6. Verfahren zur Herstellung eines Stators (2) einer dynamoelektrischen rotatorischen Maschine (1) nach einem der vorhergehenden Ansprüche, **dadurch gekenn-zeichnet**, dass der Stator (2) mit vertikaler Achse (7) oder mit einer Neigung der Achse (7) von max. 45 Grad befüllt wird.

7. Dynamoelektrische rotatorische Maschine (1), mit einem Stator (2) mit einem magnetisch leitfähigen Körper, insbesondere einem axial geschichteten Blechpaket (4), wobei in zu einer Innenbohrung (5) des Stators (2) weisenden Nuten (6) ein Wicklungssystem (3) angeordnet ist, das den Stirnseiten des magnetisch leitfähigen Körpers jeweils ein Wickelkopf (10) ausbildet,
wobei zwischen dem magnetisch leitfähigen Körper und einem insbesondere wärmeleitenden Gehäuse (12) eine drehfeste Verbindung vorgesehen ist,
wobei sich das Gehäuse (12) auf beiden Seiten des magnetisch leitfähigen Körpers des Stators (2) axial zumindest bis zum axial äußeren Rand des jeweiligen Wickelkopfes (10) erstreckt, wobei der sich im Bereich der Wickelköpfe (10) umlaufende Spalt (14) zwischen einer radialen Außenseite (16) des Wickelkopfes (10) und einem inneren Rand (17) des Gehäuses (12) vorhandene Spalt (14) mittels einer Vergussmasse, (18) mit zumindest einem rheologie-optimierten Additiv gefüllt ist, so dass sich eine thermische Anbindung des Wickelkopfes (10) an das Gehäuse (12) einstellt,
und einem Rotor (19), wobei Stator (2) und Rotor (19) durch einen Luftspalt (15) voneinander beabstandet sind.

8. Dynamoelektrische rotatorische Maschine (1) nach Anspruch 7, **dadurch gekennzeichnet, dass** das Gehäuse (12) zumindest abschnittsweise in Umfangsrichtung und/oder axialer Richtung betrachtet abstehende Rippen (21) aufweist.

9. Dynamoelektrische rotatorische Maschine (1) nach Anspruch 7 oder 8, **dadurch gekennzeichnet, dass** das Gehäuse (12) Mittel aufweist, um eine Wassermantelkühlung (22) oder einen geschlossen Innenluftkühlkreislauf (23) vorzusehen.

10. Dynamoelektrische rotatorische Maschine (1) nach einem der Ansprüche 7 bis 9, **dadurch gekenn-zeichnet**, dass das Gehäuse (12) aus Aluminium oder anderen wärmeleitenden Materialen ist.

11. Verwendung einer dynamoelektrischen rotatorischen Maschine (1) nach Anspruch 7 bis 10 hergestellt nach einem der Ansprüche 1 bis 6 als Antrieb u.a. bei Lüftern, Verdichtern, Kompressoren und Pumpen.

12. Verwendung einer dynamoelektrischen rotatorischen Maschine (1) nach Anspruch 11 beispielsweise im industriellen Umfeld, in der Nahrungsmittelindustrie, in der Verkehrstechnik, bei Klimaanlagen.
